# EUROPÄISCHE PATENTSCHRIFT

(11) **EP 2 463 064 B1**
(45) Veröffentlichungstag und Bekanntmachung des Hinweises auf die Patenterteilung: **17.12.2014**
(21) Anmeldenummer: 11189275.8
(22) Anmeldetag: 16.11.2011
(51) Int. Cl.: B25H 1/00

(54) **Vorrichtung zur Führung eines Werkzeuggerätes**
Device for guiding a tool
Dispositif destiné au guidage d'un outil

(30) Priorität: 09.12.2010 DE 102010062703
(43) Veröffentlichungstag der Anmeldung: 13.06.2012
(73) Patentinhaber: HILTI Aktiengesellschaft, 9494 Schaan (LI)
(72) Erfinder: Sattler, Christian, 87640 Biessenhofen (DE)
(74) Vertreter: Hilti Aktiengesellschaft Corporate Intellectual Property

(56) Entgegenhaltungen:
- EP-A1- 1 380 391
- US-A- 4 468 159
- US-A1- 2006 285 932
- US-B1- 6 309 148

## Beschreibung

Die vorliegende Erfindung betrifft eine Vorrichtung zur Führung eines Werkzeuggerätes mit den Merkmalen gemäß dem Oberbegriff des Patentanspruchs 1, die aus dem Dokument EP 1 380 391 A bekannt ist.

Bekannte Vorrichtungen zur Führung eines Werkzeuggerätes entlang einer Vorschubrichtung bestehen aus einer Grundplatte, die mittels einer Befestigungseinrichtung an einem Untergrund befestigbar ist, und einem Führungsschienenabschnitt, der mit der Grundplatte über eine Verbindungseinrichtung verbindbar ist und eine Kontureinrichtung aufweist. Das Werkzeuggerät ist über einen Führungsschlitten an der Führungsvorrichtung angeordnet und mittels einer Vorschubeinrichtung entlang des Führungsschienenabschnittes in der Vorschubrichtung verschiebbar. Der Führungsschlitten weist eine Gegenkontureinrichtung auf, die mit der Kontureinrichtung in Eingriff bringbar ist.

Beim Erstellen von Kernlochbohrungen muss der Bediener den Bohrkern sowie entstandenes Bohrklein nach der Bohrung aus dem Bohrloch entfernen. Bei Bohrkronen mit einem großen Durchmesser besteht das Problem, dass der Bohrkern sehr schwer ist und das erstellte Bohrloch sich direkt unterhalb der Bohrkrone befindet.

Die Aufgabe der vorliegenden Erfindung besteht darin, eine Vorrichtung zur Führung eines Werkzeuggerätes dahingehend weiterzuentwickeln, dass Rüstarbeiten am Werkzeuggerät und das Entfernen des Bohrkerns sowie von Bohrklein aus einem Bohrloch für den Bediener erleichtert sind.

Diese Aufgabe wird bei der eingangs genannten Vorrichtung zur Führung eines Werkzeuggerätes erfindungsgemäß durch die Merkmale des unabhängigen Patentanspruchs 1 gelöst. Vorteilhafte Ausgestaltungen ergeben sich aus den abhängigen Patentansprüchen.

Erfindungsgemäß ist ein zweiter Führungsschienenabschnitt vorgesehen, der mit dem ersten Führungsschienenabschnitt verbindbar und relativ zum ersten Führungsschienenabschnitt um eine zur Vorschubrichtung parallele Drehachse drehbar ausgebildet ist. Der Vorteil des drehbaren, zweiten Führungsschienenabschnittes besteht darin, dass das Werkzeuggerät zum Rüsten in eine für den Bediener ergonomisch günstige Position gedreht werden kann. Zum Entfernen des Bohrkerns aus einem Bohrloch wird das Werkzeuggerät in eine Position gedreht, in der das Bohrloch für den Bediener uneingeschränkt zugänglich ist.

Bevorzugt sind der erste und zweite Führungsschienenabschnitt über ein Achseelement verbunden, wobei das Achseelement in einem ersten Lagerelement des ersten Führungsschienenabschnittes und einem zweiten Lagerelement des zweiten Führungsschienenabschnittes gelagert ist. Dabei sind das erste Lagerelement an einem dem zweiten Führungsschienenabschnitt zugewandten Ende des ersten Führungsschienenabschnittes und das zweite Lagerelement an einem dem ersten Führungsschienenabschnitt zugewandten Ende des zweiten Führungsschienenabschnittes angeordnet.

Besonders bevorzugt ist das Achseelement in einem weiteren Lagerelement des zweiten Führungsschienenabschnittes gelagert, wobei das weitere Lagerelement an einem dem ersten Führungsschienenabschnitt abgewandten Ende des zweiten Führungsschienenabschnittes angeordnet ist. Das weitere Lagerelement erhöht die Stabilität und die Ausrichtung des zweiten Führungsschienenabschnittes parallel zur Drehachse. Außerdem kann eine Feststelleinrichtung zur Feststellung des zweiten Führungsschienenabschnittes über das Achselement an der Oberseite des zweiten Führungsschienenabschnittes vorgesehen werden. Die Oberseite ist gut zugänglich und einfach bedienbar gegenüber einer Feststelleinrichtung, die zwischen dem ersten und zweiten Führungsschienenabschnitt angeordnet ist.

In einer bevorzugten Ausführungsform ist das Achselement drehfest mit dem ersten Führungsschienenabschnitt verbunden und der zweite Führungsschienenabschnitt ist relativ zum Achselement um die Drehachse drehbar ausgebildet. Diese Ausführungsform ist vorteilhaft, wenn das Achselement in zwei Lagerelementen des zweiten Führungsschienenabschnittes, die an einander gegenüber liegenden Enden angebracht sind, gelagert ist. Durch diese Lagerung ist das Achselement gut geführt und die Ausrichtung der Führungsschiene bei der Drehung um die Drehachse ist stabil und parallel zur Vorschubrichtung. Diese Ausführungsform eignet sich vor allem für lange und/oder schwere zweite Führungsschienenabschnitte.

In einer alternativen bevorzugten Ausführungsform ist das Achselement drehfest mit dem zweiten Führungsschienenabschnitt verbunden und relativ zum ersten Führungsschienenabschnitt um die Drehachse drehbar ausgebildet. Diese Ausführungsform ist vorteilhaft, wenn das Achselement in zwei Lagerelementen des ersten Führungsschienenabschnittes, die an einander gegenüber liegenden Enden angebracht sind, gelagert ist. Diese Ausführungsform eignet sich vor allem für kurze und/oder leichte zweite Führungsschienenabschnitte.

Bevorzugt ist zwischen dem ersten Führungsschienenabschnitt und dem zweiten Führungsschienenabschnitt eine Vorrichtung zum Ausrichten des zweiten Führungsschienenabschnitts vorgesehen. Eine Vorrichtung zum Ausrichten des zweiten Führungsschienenabschnittes hat den Vorteil, dass der zweite Führungsschienenabschnitt in eine gewünschte Position gedreht werden kann und ein unbeabsichtigtes Drehen aus der gewünschten Position zumindest erschwert wird.

Besonders bevorzugt weist die Vorrichtung zum Ausrichten des zweiten Führungsschienenabschnittes eine erste Führungseinrichtung, die am ersten Führungsschienenabschnitt angeordnet ist, und eine zweite Führungseinrichtung, die am zweiten Führungsschienenabschnitt angeordnet ist, auf. Der zweite Führungsschienenabschnitt kann relativ zum ersten Führungsschienenabschnitt in die gewünschte Position gedreht werden. Die genaue Ausrichtung der beiden Führungsschienenabschnitte ist erforderlich, um den Führungsschlitten von einem Führungsschienenabschnitt auf den anderen Führungsschienenabschnitt zu bewegen.

Besonders bevorzugt sind die erste Führungseinrichtung in das erste Lagerelement und die zweite Führungseinrichtung in das zweite Lagerelement integriert. Das Lagerelement mit der integrierten Führungseinrichtung kann als separate Komponente hergestellt und mit einer herkömmlichen Führungsschiene verbunden werden.

In einer bevorzugten Ausführung sind die erste und zweite Führungseinrichtung identisch aufgebaut und weisen eine Erhebung und mindestens eine Vertiefung auf. Identisch aufgebaute Führungseinrichtungen haben den Vorteil, dass der Herstellungsaufwand reduziert ist. In der Grundposition fluchten die Kontureinrichtungen des ersten und zweiten Führungsschienenabschnittes. Die Erhebung der ersten Führungseinrichtung greift in die Vertiefung der zweiten Führungseinrichtung ein und die Erhebung der zweiten Führungseinrichtung greift in die Vertiefung der ersten Führungseinrichtung ein. Dadurch, dass in der Grundposition zwei Rastpositionen vorgesehen sind, ist die Ausrichtung der Führungsschiene zur Grundplatte genauer.

Besonders bevorzugt weist die Führungseinrichtung eine Erhebung und drei Vertiefungen auf, wobei die Erhebung und die drei Vertiefungen auf einem Kreis unter jeweils 90° zueinander versetzt angeordnet sind. Der Bediener kann den zweiten Führungsschienenabschnitt neben der Grundposition in zwei Vorzugspositionen, die jeweils 90° zur Grundposition versetzt sind, anordnen. Diese Vorzugspositionen haben den Vorteil, dass der Bediener das Werkzeuggerät ohne messtechnischen Aufwand in die Vorzugsposition drehen kann und ein unbeabsichtigtes Drehen aus der Vorzugsposition zumindest erschwert ist. Vorzugspositionen in der Führungseinrichtung bieten sich für Winkel an, die häufig eingestellt werden. Bevorzugt weist die Führungseinrichtung Freistellungsnuten zur Freistellung der Erhebung auf. Die Freistellungsnuten haben den Vorteil, dass der Verschleiß der Oberfläche durch die Erhebung bei einer Drehung des zweiten Führungsschienenabschnittes reduziert ist.

In einer weiteren bevorzugten Ausführung weist die Führungseinrichtung ein Federelement auf. Dies hat den Vorteil, dass der Verschleiß der Erhebung der Führungseinrichtung durch die Begrenzung der Druckkraft auf die Erhebung bzw. auf die Begrenzungen der Vertiefung, reduziert wird. Durch die federnd ausgeführte Erhebung ist die Verdrehung aus den Vorzugspositionen gegen das Federelement möglich. Dabei weist das Federelement bevorzugt eine Kugel und eine Druckfeder auf. Das Maß der Erhebung, Überstand der Kugel, ist durch einen geometrischen Anschlag der Kugel in der Bohrung in der Führungseinrichtung definiert.

Bevorzugt ist eine Feststelleinrichtung zur Feststellung des zweiten Führungsschienenabschnittes vorgesehen, wobei der zweite Führungsschienenabschnitt mittels der Feststelleinrichtung zwischen einer Verstellposition, in der der zweite Führungsschienenabschnitt relativ zur Grundplatte um die Drehachse drehbar ist, und einer Feststellposition, in der der zweite Führungsschienenabschnitt relativ zur Grundplatte festgestellt ist, verstellbar ist. Durch die Feststelleinrichtung kann die Ausrichtung des zweiten Führungsschienenabschnittes relativ zum ersten Führungsschienenabschnitt festgestellt werden, so dass eine unbeabsichtigte Drehung des zweiten Führungsschienenabschnittes sicher vermieden wird.

Besonders bevorzugt ist die Feststelleinrichtung zur Feststellung des zweiten Führungsschienenabschnittes an einer dem ersten Führungsschienenabschnitt abgewandten Oberseite des zweiten Führungsschienenabschnittes angeordnet. Die Oberseite des zweiten Führungsschienenabschnittes ist für den Bediener gut zugänglich, so dass eine an der Oberseite angebrachte Feststelleinrichtung einfacher bedienbar ist gegenüber einer Feststelleinrichtung, die zwischen dem ersten und zweiten Führungsschienenabschnitt angeordnet ist.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fig. 1: ein ständergeführtes Gerätesystem mit einem Kernbohrgerät, das über einen Führungsschlitten an einer Führungsschiene eines Bohrständers geführt ist, wobei die Führungsschiene einen mit einer Grundplatte verbundenen ersten Führungsschienenabschnitt und einen zum ersten Führungsschienenabschnitt drehbar ausgebildeten zweiten Führungsschienenabschnitt aufweist;
- Fign. 2A, B: den zweiten Führungsschienenabschnitt, der zum ersten Führungsschienen-abschnitt drehbar ist, in einer dreidimensionalen Ansicht (Fig. 2A) und in einem Halbschnitt (Fig. 2B); und
- Fig. 3: einen Ausschnitt des zweiten Führungsschienenabschnittes mit einem Lager-element, in das eine Führungseinrichtung zum Ausrichten des zweiten Führungsschienenabschnittes integriert ist.

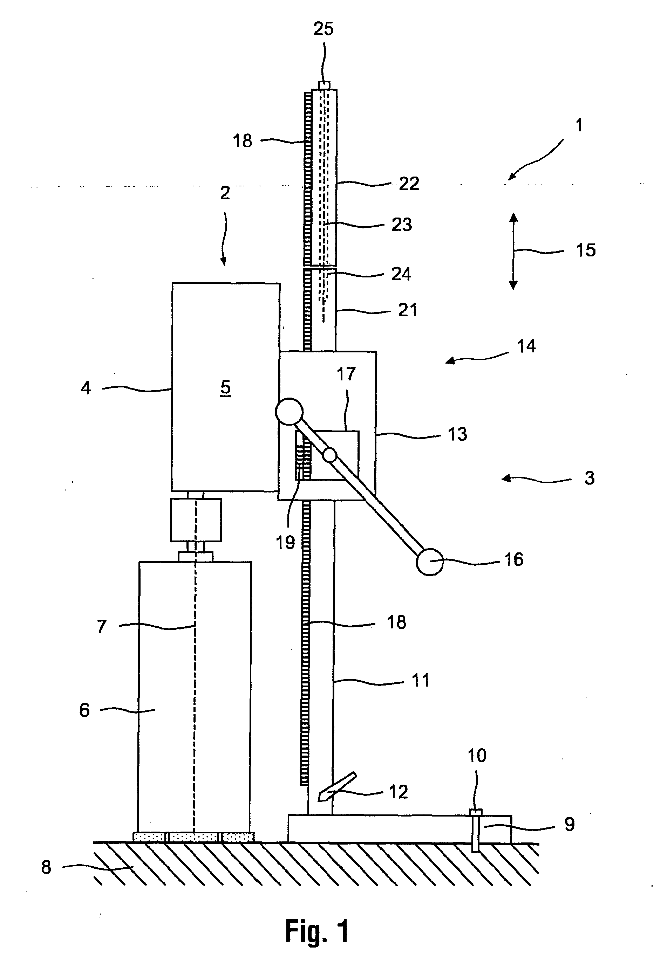

**Fig. 1** zeigt in einer schematischen Darstellung ein ständergeführtes Gerätesystem **1** bestehend aus einem Werkzeuggerät **2,** das an einer als Bohrständer ausgebildeten Führungsvorrichtung **3** angeordnet ist. Das Werkzeuggerät ist als Kernbohrgerät 2 ausgebildet und umfasst eine in einem Maschinengehäuse **4** angeordnete Maschineneinheit **5,** die eine Bohrkrone **6** um eine Drehachse **7** antreibt.

Der Bohrständer 3 ist an einem Untergrund **8** angeordnet und besteht aus einer Grundplatte **9,** die mittels einer Befestigungseinrichtung **10** am Untergrund 8 befestigbar ist, und einer Führungsschiene **11,** die mittels einer Verbindungseinrichtung **12** mit der Grundplatte 9 verbunden ist. Das Kernbohrgerät 2 ist über einen Führungsschlitten **13** am Bohrständer 3 angeordnet und mittels einer Vorschubeinrichtung **14** entlang der Führungsschiene 11 in einer Vorschubrichtung **15** verschiebbar.

Die Vorschubeinrichtung **14** umfasst eine als drehbare Klemmstange ausgebildete Antriebseinrichtung **16** und eine Übertragungseinrichtung **17,** die die Bewegung der Antriebseinrichtung 16 auf den Führungsschlitten 13 überträgt. Die Drehbewegung der Klemmstange 16 wird mittels eines Zahnrades und einer Zahnstange in eine Verschiebung des Führungsschlittens 13 entlang der Führungsschiene 11 umgesetzt. Die Führungsschiene 11 umfasst eine Kontureinrichtung **18,** die als Zahnstange ausgebildet ist und in eine als Zahnrad ausgebildete Gegenkontureinrichtung **19** der Übertragungseinrichtung 17 eingreift. Die Kontureinrichtung 18 und die Gegenkontureinrichtung 19 sind an die Antriebseinrichtung 16 angepasst. Die Vorschubbewegung des Führungsschlittens 13 kann von einer manuellen oder motorischen Antriebseinrichtung über eine Drehbewegung oder eine lineare Bewegung erzeugt werden. Bei einer linearen Antriebsbewegung erfolgt die Übertragung beispielsweise über zwei Zahnräder.

Die Führungsschiene 11 besteht aus einem ersten Führungsschienenabschnitt **21,** der mittels der Verbindungseinrichtung 12 mit der Grundplatte 9 verbunden ist, und einem zweiten Führungsschienenabschnitt **22.** Der zweite Führungsschienenabschnitt 22 ist um eine zur Vorschubrichtung 15 parallele Drehachse **23** relativ zum ersten Führungsschienenabschnitt 21 drehbar ausgebildet, wobei die Drehachse 23 außerdem parallel zur Drehachse 7, um die die Bohrkrone 6 beim Erstellen von Kernlochbohrungen bewegt wird, verläuft. Die Drehung des zweiten Führungsschienenabschnittes 22 erfolgt über ein Achselement **24,** das an dem ersten und zweiten Führungsschienenabschnitt 21, 22 gelagert ist. Der zweite Führungsschienenabschnitt 22 ist mittels einer Feststelleinrichtung **25** zwischen einer Verstellposition, in der der zweite Führungsschienenabschnitt 22 relativ zum ersten Führungsschienenabschnitt 21 um die Drehachse 23 drehbar ist, und einer Feststellposition, in der der zweite Führungsschienenabschnitt 22 relativ zum ersten Führungsschienenabschnitt 21 drehfest ausgebildet ist, verstellbar.

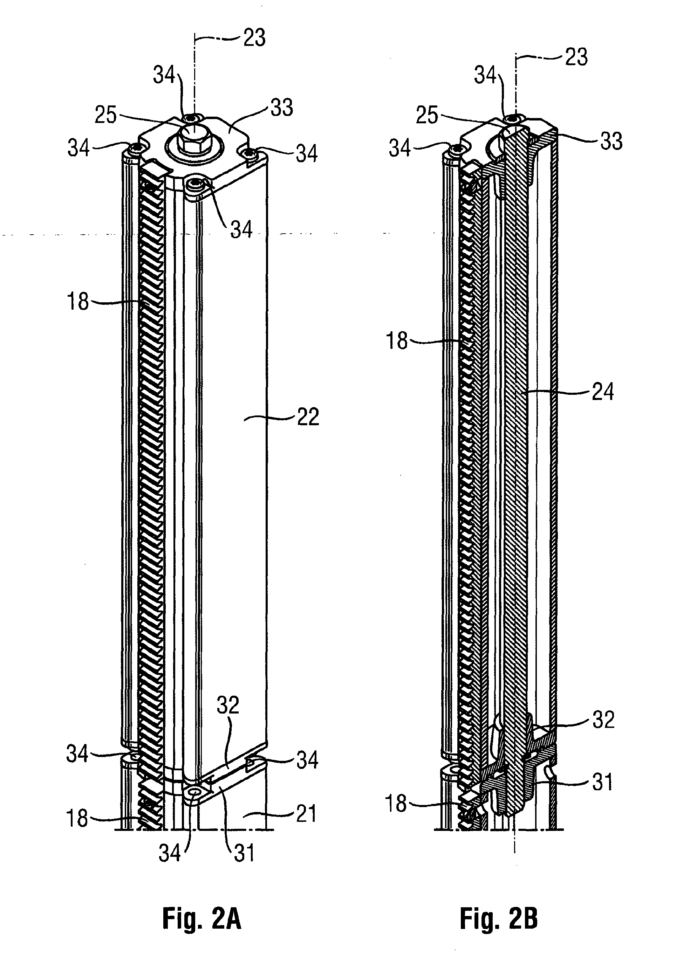

**Fign. 2A****, B** zeigen den zweiten Führungsschienenabschnitt 22, der zum ersten Führungsschienenabschnitt 21 um die Drehachse 23 drehbar ist, in einer dreidimensionalen Ansicht (Fig. 2A) und in einem Halbschnitt (Fig. 2B).

Die Drehung des zweiten Führungsschienenabschnittes 22 erfolgt über das Achselement 24, das in einem ersten Lagerelement **31** des ersten Führungsschienenabschnittes 21 sowie in einem zweiten und dritten Lagerelement **32, 33** des zweiten Führungsschienenabschnittes 22 gelagert ist.

Das erste Lagerelement 31 ist an einer dem zweiten Führungsschienenabschnitt 22 zugewandten Oberseite des ersten Führungsschienenabschnittes 21 angeordnet und über mehrere Schraubverbindungen **34** drehfest mit dem ersten Führungsschienenabschnitt 21 verbunden. Das zweite und dritte Lagerelement 32, 33 sind an einer dem ersten Führungsschienenabschnitt 21 zugewandten Unterseite bzw. an einer dem ersten Führungsschienenabschnitt 21 abgewandten Oberseite des zweiten Führungsschienenabschnittes 22 über Schraubverbindungen 34 jeweils drehfest mit dem zweiten Führungsschienenabschnittes 22 verbunden.

Das Achselement 24 ist sowohl in der Feststellposition als auch in der Verstellposition des zweiten Führungsschienenabschnittes 22 drehfest im ersten Lagerelement 31 gelagert. Der zweite Führungsschienenabschnitt 22 ist in der Verstellposition relativ zum Achselement 24 um die Drehachse 23 drehbar ausgebildet und in der Feststellposition drehfest zum Achselement 24 angeordnet.

Das dritte Lagerelement 33, das an der dem ersten Führungsschienenabschnitt 21 abgewandten Oberseite des zweiten Führungsschienenabschnittes 22 angeordnet ist, hat den Vorteil, dass die Feststelleinrichtung 25 an der Oberseite gut zugänglich und einfach bedienbar ist gegenüber einer Feststelleinrichtung, die zwischen dem ersten und zweiten Führungsschienenabschnitt 21, 22 angeordnet ist.

Das Kernbohrgerät 2 wird zu Rüstarbeiten oder zum Entfernen des Bohrkerns aus dem Bohrloch entlang der Führungsschiene 11 verfahren, bis der Führungsschlitten 13 auf dem zweiten Führungsschienenabschnitt 22 positioniert ist. Durch Lösen der Feststelleinrichtung 25 wird der zweite Führungsschienenabschnitt 22 aus der Feststellposition in die Verstellposition überführt. In der Verstellposition sind das zweite und dritte Lagerelement 32, 33 des zweiten Führungsschienenabschnittes 22 relativ zum Achselement 24 um die Drehachse 23 drehbar. Der zweite Führungsschienenabschnitt 22 wird in die gewünschte Position gedreht. Bei Bedarf kann der zweite Führungsschienenabschnitt 22 durch Schließen der Feststelleinrichtung 25 aus der Verstellposition in die Feststellposition überführt werden. Ist dies der Fall, muss die Feststelleinrichtung 25 geöffnet werden, um die Grundposition wieder herzustellen.

Nach Abschluss der Rüstarbeiten und/oder nach Entfernen des Bohrkerns aus dem Bohrloch werden der zweite Führungsschienenabschnitt 22 und das daran angebrachte Kernbohrgerät 2 in die Grundposition gedreht. Die Führungsschiene darf aus Sicherheitsgründen nur dann zur Vorschubbewegung des Führungsschlittens eingesetzt werden, wenn die Position der Führungsschiene festgestellt ist, d.h. wenn sich der zweite Führungsschienenabschnitt 22 in der Feststellposition befindet. Ist dies nicht der Fall, kann es zu Unfällen oder Beschädigungen des Gerätesystems kommen.

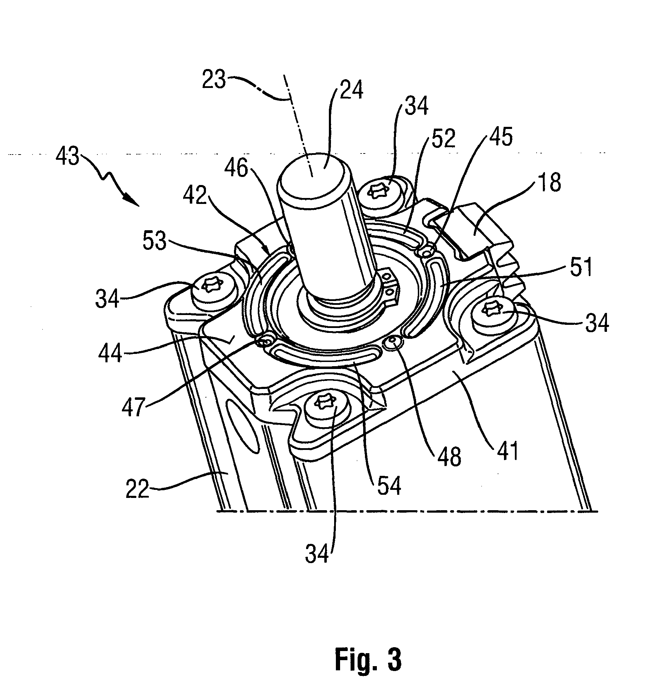

**Fig. 3** zeigt einen Ausschnitt des zweiten Führungsschienenabschnittes 22 mit einem Lagerelement **41** zur Lagerung des Achselementes 24, wobei das Lagerelement 41 zum Ausrichten des zweiten Führungsschienenabschnittes 22 relativ zum ersten Führungsschienenabschnitt 21 eine Führungseinrichtung **42** aufweist.

Das Lagerelement **41** entspricht ansonsten dem Aufbau des ersten und zweiten Lagerelementes 31, 32 der Fign. 2A, B und ist analog über Schraubverbindungen 34 drehfest mit dem zweiten Führungsschienenabschnitt 22 verbunden.

Die Führungseinrichtung 42 ist Teil einer Vorrichtung **43** zum Ausrichten des zweiten Führungsschienenabschnittes 22, die zwischen dem ersten Führungsschienenabschnitt 21 und dem zweiten Führungsschienenabschnitt 22 angeordnet ist. Die Ausrichtvorrichtung 43 umfasst neben der Führungseinrichtung 42, die als erste Führungseinrichtung 42 bezeichnet wird und am zweiten Führungsschienenabschnitt 22 vorgesehen ist, eine zweite Führungseinrichtung, die in das Lagerelement des ersten Führungsschienenabschnittes 21 integriert ist. Um den Fertigungsaufwand zu reduzieren, sind die erste Führungseinrichtung 42 und die zweite Führungseinrichtung identisch aufgebaut.

Das Lagerelement 41 umfasst eine dem ersten Führungsschienenabschnitt 21 zugewandte Oberfläche **44,** in die die erste Führungseinrichtung 42 integriert ist. Die erste Führungseinrichtung 42 besteht aus einer ersten, zweiten und dritten Vertiefung **45, 46, 47,** die in die Oberfläche 44 eingelassen sind. Die Vertiefungen 45, 46, 47 sind auf einem Kreisbogen um jeweils 90° zueinander versetzt angeordnet. Die erste Führungseinrichtung 42 weist außerdem eine Führungsnase in Form einer Erhebung **48** auf, die ebenfalls auf dem Kreisbogen angeordnet und um jeweils 90° zur ersten und dritten Vertiefung 45, 47 versetzt ist. Die Erhebung 48 ist um 180° zur zweiten Vertiefung 46 versetzt angeordnet.

In die Oberfläche 44 der ersten Führungseinrichtung 42 sind vier Freistellungsnuten **51, 52, 53, 54** eingelassen, die in Form eines Kreisabschnittes ausgebildet sind. Die erste Freistellungsnut 51 ist zwischen der Erhebung 48 und der ersten Vertiefung 45 angeordnet, die zweite Freistellungsnut 52 zwischen der ersten und zweiten Vertiefung 45, 46, die dritte Freistellungsnut 53 zwischen der zweiten und dritten Vertiefung 46, 47 und die vierte Freistellungsnut 54 zwischen der dritten Vertiefung 47 und der Erhebung 48.

In der Grundposition fluchten die Kontureinrichtungen 18 des ersten und zweiten Führungsschienenabschnittes 21, 22. Die Erhebung 48 der ersten Führungseinrichtung 42 greift in die zweite Vertiefung der zweiten Führungseinrichtung ein und die Erhebung der zweiten Führungseinrichtung greift in die zweite Vertiefung 46 der ersten Führungseinrichtung 42 ein. Um den Bohrkern aus dem Bohrloch im Untergrund 8 zu entfernen, wird der zweite Führungsschienenabschnitt 22 um die Drehachse 23 in eine um 90° versetzte Position gedreht, bei der die Erhebung 48 der ersten Führungseinrichtung 42 in die erste oder dritte Vertiefung der zweiten Führungseinrichtung eingreift und die Erhebung der zweiten Führungseinrichtung in die dritte oder erste Vertiefung 47, 45 der ersten Führungseinrichtung 42 eingreift.

Wenn die Erhebung 48 der ersten Führungseinrichtung 42 in eine Vertiefung der zweiten Führungseinrichtung eingreift, besteht eine Verdrehsicherung, die verhindert, dass sich der zweite Führungsschienenabschnitt 22 ohne Krafteinwirkung dreht. Die Stärke der Verdrehsicherung lässt sich beispielsweise über die Höhe der Erhebung einstellen. Sollte die Verdrehsicherung nicht ausreichen, kann der zweite Führungsschienenabschnitt 22 durch Schließen der Feststelleinrichtung 25 in die Feststellposition überführt werden. In der Feststellposition ist der zweite Führungsschienenabschnitt 22 drehfest zum ersten Führungsschienenabschnitt 21 gelagert.

## Patentansprüche

1. Vorrichtung (3) zur Führung eines Werkzeuggerätes (2) entlang einer Vorschubrichtung (15) bestehend aus
einer Grundplatte (9), die mittels einer Befestigungseinrichtung (10) an einem Untergrund (8) befestigbar ist,
einem ersten Führungsschienenabschnitt (21), der mit der Grundplatte (9) über eine Verbindungseinrichtung (12) verbindbar ist und eine Kontureinrichtung (18) aufweist, und einem Führungsschlitten (13) zur Führung des Werkzeuggerätes (2) entlang der Vorschubrichtung (15), wobei der Führungsschlitten (13) eine Gegenkontureinrichtung (19) aufweist, die mit der Kontureinrichtung (18) in Eingriff bringbar ist,
**dadurch gekennzeichnet, dass**
ein zweiter Führungsschienenabschnitt (22) vorgesehen ist, der mit dem ersten Führungsschienenabschnitt (21) verbindbar und relativ zum ersten Führungsschienenabschnitt (21) um eine zur Vorschubrichtung (15) parallele Drehachse (23) drehbar ausgebildet ist.

2. Vorrichtung nach Anspruch 1, **dadurch gekennzeichnet, dass** der erste und zweite Führungsschienenabschnitt (21, 22) über ein Achselement (24) verbunden sind, wobei das Achselement (24) in einem ersten Lagerelement (31) des ersten Führungsschienenabschnittes (21) und einem zweiten Lagerelement (32) des zweiten Führungsschienenabschnittes (22) gelagert ist.

3. Vorrichtung nach Anspruch 2, **dadurch gekennzeichnet, dass** das Achselement (24) in einem weiteren Lagerelement (33) des zweiten Führungsschienenabschnittes (22) gelagert ist, wobei das weitere Lagerelement (33) an einem dem ersten Führungsschienenabschnitt (21) abgewandten Ende des zweiten Führungsschienenabschnittes (22) angeordnet ist.

4. Vorrichtung nach einem der Ansprüche 2 bis 3, **dadurch gekennzeichnet, dass** das Achselement (24) drehfest mit dem ersten Führungsschienenabschnitt (21) verbunden ist und der zweite Führungsschienenabschnitt (22) relativ zum Achselement (24) um die Drehachse (23) drehbar ausgebildet ist.

5. Vorrichtung nach einem der Ansprüche 2 bis 3, **dadurch gekennzeichnet, dass** das Achselement (24) drehfest mit dem zweiten Führungsschienenabschnitt (22) verbunden und relativ zum ersten Führungsschienenabschnitt (21) um die Drehachse (23) drehbar ausgebildet.

6. Vorrichtung nach einem der Ansprüche 1 bis 5, **dadurch gekennzeichnet, dass** zwischen dem ersten Führungsschienenabschnitt (21) und dem zweiten Führungsschienenabschnitt (22) eine Vorrichtung (43) zum Ausrichten des zweiten Führungsschienenabschnitts (22) vorgesehen ist.

7. Vorrichtung nach Anspruch 6, **dadurch gekennzeichnet, dass** die Vorrichtung (43) zum Ausrichten des zweiten Führungsschienenabschnittes (22) eine erste Führungseinrichtung (42), die am ersten Führungsschienenabschnitt (21) angeordnet ist, und eine zweite Führungseinrichtung, die am zweiten Führungsschienenabschnitt (22) angeordnet ist, aufweist.

8. Vorrichtung nach Anspruch 7, **dadurch gekennzeichnet, dass** die erste Führungseinrichtung (42) in das erste Lagerelement (31) und die zweite Führungseinrichtung in das zweite Lagerelement (32) integriert ist.

9. Vorrichtung nach einem der Ansprüche 7 bis 8, **dadurch gekennzeichnet, dass** die erste und zweite Führungseinrichtung (42) identisch aufgebaut sind und eine Erhebung (48) und mindestens eine Vertiefung (45, 46, 47) aufweisen.

10. Vorrichtung nach Anspruch 9, **dadurch gekennzeichnet, dass** die Führungseinrichtung (42) drei Vertiefungen (45, 46, 47) aufweist, wobei die Erhebung (48) und die Vertiefungen (45, 46, 47) auf einem Kreis unter jeweils 90° zueinander versetzt angeordnet sind.

11. Vorrichtung nach einem der Ansprüche 7 bis 10, **dadurch gekennzeichnet, dass** die Führungseinrichtung (42) Freistellungsnuten (51, 52, 53, 54) zur Freistellung der Erhebung (48) bei einer Drehung um die Drehachse (24) aufweist.

12. Vorrichtung nach einem der Ansprüche 6 bis 11, **dadurch gekennzeichnet, dass** die Führungseinrichtung ein Federelement aufweist.

13. Vorrichtung nach einem der Ansprüche 1 bis 12, **dadurch gekennzeichnet, dass** eine Feststelleinrichtung (25) zur Feststellung des zweiten Führungsschienenabschnittes (22) vorgesehen ist, wobei der zweite Führungsschienenabschnitt (22) mittels der Feststelleinrichtung (25) zwischen einer Verstellposition, in der der zweite Führungsschienenabschnitt (22) relativ zum ersten Führungsschienenabschnitt (21) um die Drehachse (23) drehbar ausgebildet ist, und einer Feststellposition, in der der zweite Führungsschienenabschnitt (22) relativ zum ersten Führungsschienenabschnitt (21) drehfest ausgebildet ist, verstellbar ist.

14. Vorrichtung nach Anspruch 13, **dadurch gekennzeichnet, dass** die Feststelleinrichtung (25) zur Feststellung des zweiten Führungsschienenabschnittes (22) an einer dem ersten Führungsschienenabschnitt (21) abgewandten Oberseite des zweiten Führungsschienenabschnittes (22) angeordnet ist.

## Claims

1. Device (3) for guiding a power tool (2) along a feed direction (15), consisting of:
a base plate (9) which is fastenable to a substrate (8) by means of a fastening device (10),
a first guide rail section (21) which is connectable to the base plate (9) via a connecting device (12) and which has a profiled element (18), and a slide carriage (13) for guiding the power tool (2) along the feed direction (15), the slide carriage (13) having a counter-profiled element (19) which can be brought into engagement with the profiled element (18),
**characterised in that**
there is provided a second guide rail section (22) which is connectable to the first guide rail section (21) and is configured to be rotatable relative to the first guide rail section (21) about an axis of rotation (23) parallel to the feed direction (15).

2. Device according to Claim 1, **characterised in that** the first and second guide rail sections (21, 22) are connected via a spindle element (24), the spindle element (24) being mounted in a first bearing element (31) of the first guide rail section (21) and in a second bearing element (32) of the second guide rail section (22).

3. Device according to Claim 2, **characterised in that** the spindle element (24) is mounted in a further bearing element (33) of the second guide rail section (22), the further bearing element (33) being arranged at an end of the second guide rail section (22) oriented away from the first guide rail section (21).

4. Device according to either of Claims 2 and 3, **characterised in that** the spindle element (24) is connected non-rotatably to the first guide rail section (21) and the second guide rail section (22) is configured to be rotatable relative to the spindle element (24) about the axis of rotation (23).

5. Device according to either of Claims 2 and 3, **characterised in that** the spindle element (24) is connected non-rotatably to the second guide rail section (22) and is rotatable relative to the first guide rail section (21) about the axis of rotation (23).

6. Device according to any one of Claims 1 to 5, **characterised in that** a device (43) for aligning the second guide rail section (22) is provided between the first guide rail section (21) and the second guide rail section (22).

7. Device according to Claim 6, **characterised in that** the device (43) for aligning the second guide rail section (22) comprises a first guide arrangement (42) arranged on the first guide rail section (21) and a second guide arrangement arranged on the second guide rail section (22).

8. Device according to Claim 7, **characterised in that** the first guide arrangement (42) is integrated in the first bearing element (31) and the second guide arrangement is integrated in the second bearing element (32).

9. Device according to either of Claims 7 and 8, **characterised in that** the first and second guide arrangements (42) are of identical construction and have an elevation (48) and at least one recess (45, 46, 47).

10. Device according to Claim 9, **characterised in that** the guide arrangement (42) has three recesses (45, 46, 47), the elevation (48) and the recesses (45, 46, 47) being arranged on a circle offset from one another by 90° in each case.

11. Device according to any one of Claims 7 to 10, **characterised in that** the guide device (42) has release grooves (51, 52, 53, 54) for releasing the elevation (48) in the event of a rotation about the axis of rotation (24).

12. Device according to any one of Claims 6 to 11, **characterised in that** the guide device has a spring element.

13. Device according to any one of Claims 1 to 12, **characterised in that** a fixing device (25) is provided for fixing the second guide rail section (22), the second guide rail section (22) being adjustable by means of the fixing device (25) between an adjusting position in which the second guide rail section (22) is configured to be rotatable relative to the first guide rail section (21) about the axis of rotation (23), and a fixed position in which the second guide rail section (22) is configured to be non-rotatable relative to the first guide rail section (21).

14. Device according to Claim 13, **characterised in that** the fixing device (25) for fixing the second guide rail section (22) is arranged on an upper face of the second guide rail section (22) oriented away from the first guide rail section (21).

## Revendications

1. Dispositif (3) servant à guider un outil (2) le long d'une direction d'avance (15), constitué
d'une plaque de base (9), qui peut être fixée au niveau d'un sol (8) au moyen d'un système de fixation (10),
d'une première section à rails de guidage (21), qui peut être raccordée à la plaque de base (9) par l'intermédiaire d'un système de raccordement (12) et qui présente un système de contour (18), et
d'un chariot de guidage (13) servant à guider l'outil (2) le long de la direction d'avance (15), sachant que le chariot de guidage (13) présente un système de contour complémentaire (19), qui peut être amené en prise avec le système de contour (18),
**caractérisé en ce**
**qu'**une deuxième section à rails de guidage (22) est prévue, laquelle peut être raccordée à la première section à rails de guidage (21) et qui est réalisée de manière à pouvoir tourner autour d'un axe de rotation (23) parallèle au sens d'avance (15) par rapport à la première section à rails de guidage (21).

2. Dispositif selon la revendication 1, **caractérisé en ce que** la première section à rails de guidage et la deuxième section à rails de guidage (21, 22) sont raccordées par l'intermédiaire d'un élément axial (24) logé dans un premier élément de palier (31) de la première section à rails de guidage (21) et dans un deuxième élément de palier (32) de la deuxième section à rails de guidage (22).

3. Dispositif selon la revendication 2, **caractérisé en ce que** l'élément axial (24) est logé dans un autre élément de palier (33) de la deuxième section à rails de guidage (22), l'autre élément de palier (33) étant disposé au niveau d'une extrémité, opposée à la première section à rails de guidage (21), de la deuxième section à rails de guidage (22).

4. Dispositif selon l'une quelconque des revendications 2 à 3, **caractérisé en ce que** l'élément axial (24) est lié en rotation à la première section à rails de guidage (21), et **en ce que** la deuxième section à rails de guidage (22) est rotative, par rapport à l'élément axial (24), autour de l'axe de rotation (23).

5. Dispositif selon l'une quelconque des revendications 2 à 3, **caractérisé en ce que** l'élément axial (24) est lié en rotation à la deuxième section à rails de guidage (22) et est rotative autour de l'axe de rotation (23) par rapport à la première section à rails de guidage (21).

6. Dispositif selon l'une quelconque des revendications 1 à 5, **caractérisé en ce qu'**un dispositif (43) servant à orienter la deuxième section à rails de guidage (22) est prévu entre la première section à rails de guidage (21) et la deuxième section à rails de guidage (22).

7. Dispositif selon la revendication 6, **caractérisé en ce que** le dispositif (43) servant à orienter la deuxième section à rails de guidage (22) présente un premier système de guidage (42), qui est disposé au niveau de la première section à rails de guidage (21), et un deuxième système de guidage, qui est disposé au niveau de la deuxième section à rails de guidage (22).

8. Dispositif selon la revendication 7, **caractérisé en ce que** le premier système de guidage (42) est intégré dans le premier élément de palier (31), et **en ce que** le deuxième système de guidage est intégré dans le deuxième élément de palier (32).

9. Dispositif selon l'une quelconque des revendications 7 à 8, **caractérisé en ce que** le premier système de guidage et le deuxième système de guidage (42) présentent une structure identique, et **en ce qu'**ils présentent une partie surélevée (48) et au moins un renfoncement (45, 46, 47).

10. Dispositif selon la revendication 9, **caractérisé en ce que** le système de guidage (42) présente trois renfoncements (45, 46, 47), sachant que la partie surélevée (48) et les renfoncements (45, 46, 47) sont disposés de manière décalée les uns par rapport aux autres, sur un cercle, respectivement selon un angle de 90°.

11. Dispositif selon l'une quelconque des revendications 7 à 10, **caractérisé en ce que** le système de guidage (42) présente des rainures de libération (51, 52, 53, 54) servant à libérer la partie surélevée (48) lors d'une rotation autour de l'axe de rotation (24) .

12. Dispositif selon l'une quelconque des revendications 6 à 11, **caractérisé en ce que** le système de guidage présente un élément formant ressort.

13. Dispositif selon l'une quelconque des revendications 1 à 12, **caractérisé en ce qu'**un système d'immobilisation (25) est prévu pour immobiliser la deuxième section à rails de guidage (22), qui peut être ajustée, au moyen du système d'immobilisation (25) entre une position d'ajustement, dans laquelle la deuxième section à rails de guidage (22) est réalisée de manière à pouvoir tourner autour de l'axe de rotation (23) par rapport à la première section à rails de guidage (21), et une position d'immobilisation, dans laquelle la deuxième section à rails de guidage (22) est solidaire en rotation par rapport à la première section à rails de guidage (21).

14. Dispositif selon la revendication 13, **caractérisé en ce que** le système d'immobilisation (25) servant à immobiliser la deuxième section à rails de guidage (22) est disposé au niveau d'un côté supérieur, opposé à la première section à rails de guidage (21), de la deuxième section à rails de guidage (22).
